**Europäisches Patentamt**

**European Patent Office**

**Office européen des brevets**

(19)

(11) Veröffentlichungsnummer: **0 305 462 B1**

(12)

# EUROPÄISCHE PATENTSCHRIFT

(45) Veröffentlichungstag der Patentschrift :
**27.12.91 Patentblatt 91/52**

(51) Int. Cl.⁵ : **B29C 65/20, B29C 65/02, F16L 47/02, // B29L23/22**

(21) Anmeldenummer : **88902472.5**

(22) Anmeldetag : **17.03.88**

(86) Internationale Anmeldenummer :
**PCT/EP88/00216**

(87) Internationale Veröffentlichungsnummer :
**WO 88/06966 22.09.88 Gazette 88/21**

(54) **VORRICHTUNG ZUM VERSCHWEISSEN ROHRFÖRMIGER KUNSTSTOFFTEILE.**

(30) Priorität : **18.03.87 DE 3708705**

(43) Veröffentlichungstag der Anmeldung :
**08.03.89 Patentblatt 89/10**

(45) Bekanntmachung des Hinweises auf die
Patenterteilung :
**27.12.91 Patentblatt 91/52**

(84) Benannte Vertragsstaaten :
**AT BE CH DE FR GB IT LI LU NL SE**

(56) Entgegenhaltungen :
**EP-A- 0 167 870
DD-A- 129 758
DE-A- 2 830 722
DE-A- 2 924 930
DE-A- 3 510 552
FR-A- 2 012 450
FR-A- 2 175 779**

(56) Entgegenhaltungen :
**FR-A- 2 382 324
GB-A- 826 526
GB-A- 1 549 169
NL-A- 6 903 614
US-A- 3 013 925
US-A- 3 276 941
US-A- 3 579 826
US-A- 4 051 218
US-A- 4 197 149**

(73) Patentinhaber : **"agru" Alois Gruber
Gesellschaft m.b.H.
Grünburger Strasse 41
A-4540 Bad Hall (AT)**

(72) Erfinder : **LUEGHAMER, Albert
Grünburgerstrasse 41
A-4050 Bad Hall (AT)**

(74) Vertreter : **Rupprecht, Klaus, Dipl.-Ing.
Kastanienstrasse 18
W-6242 Kronberg (DE)**

## Beschreibung

Vorrichtung zum Verbinden von rohrförmigen Teilen aus Kunststoff, insbesondere Polyvinylidenfluorid, Polypropylen oder Polyethylen, welche Teile etwa gleichen Durchmesser aufweisen, mit einem Heizelement zum Erweichen des Bereichs der angefasten Stoßfläche, mindestens eines rohrförmigen Teiles.

Das Zusammenfügen oder Verbinden von Rohren, Fittings oder anderen rohrförmigen Teilen aus Kunststoff erfolgt bisher im wesentlichen im Wege der Stumpfschweißung. Die rohrförmigen Teile werden hierbei glatt abgelängt und sodann stumpf gestoßen. Sodann wird längs des Stoßes das Material der beiden zu verbindenden Teile bis zum Erweichungs- oder Schmelzpunkt erhitzt, worauf es dann durch das Zusammenfließen des Kunststoffs beider Teile zu einem Verschweißen kommt. Bei dieser bekannten Stumpfschweißung entsteht auch an der Innenfläche des so hergestellten Rohres ein mindestens zwei bis vier Millimeter dicker Schweißwulst, der, sofern er nicht in aufwendiger Weise entfernt wird, erhebliche Strömungsverluste und/oder Ablagerungen im Rohr im Bereich dieser Schweißwülste nach sich zieht. Oftmals ist es jedoch technisch überhaupt nicht möglich, solche Schweißnähte an der Rohrinnenwandung nachträglich zu bearbeiten. In diesem Fall kommt es dann zu einem unerwünschten Anstieg des Strömungswiderstandes im Rohr sowie zu den erwähnten Ablagerungen, wenn im Rohr Flüssigkeiten mit Festkörperartikel gefördert werden.

Es wurden bereits verschiedene Wege zur Verringerung dieser Schweißwülste vorgeschlagen. So erläutert die gattungs- bildende DE-A- 3 510 552 die Anbringung fertigungstechnisch relativ aufwendiger Ausnehmungen längs der Stoßflächen der beiden miteinander zu verschweißenden Rohrteile. Diese Ausnehmungen werden dann mittels eines sie teilweise ausfüllenden Werkzeugs erweicht, so daß nach dem Entfernen des Werkzeugs die Rohrteile aneinandergefügt und miteinander verbunden werden können. Auch bei Benutzung dieses bekannten Verfahrens stellt sich jedoch ein signifikanter Innenwulst ein, der zu dem bereits erwähnten, unerwünschten Anstieg des Strömungswiderstandes im Rohr führt. Auch in der DD-A-197 216 ist darauf hingewiesen, daß u.a. Formheizelemente sowie Innenfasen und auch Herabsetzen des Schweißdruckes zu einer Verringerung der Innenwülste führen sollen.

Die Aufgabe der Erfindung besteht darin, eine Vorrichtung der eingangs genannten Art zu schaffen, mit welcher das Entstehen eines solchen Schweißwulst zu der Innenfläche von rohrförmigen Kunststoffteilen bei deren Zusammenfügen praktisch vollständig verhinderbar ist.

Diese Aufgabe ist erfindungsgemäß dadurch gelöst, daß die Anlagefläche des Heizelementes an der Stoßfläche des rohrförmigen Teils korrespondierend zu der hinterschnittenen oder ausgekehlten Stoßfläche ausgebildet ist.

Der erfindungsgemäßen Vorrichtung liegt der Gedanke zugrunde, die Stoßflächen der beiden miteinander zu verbindenden Teile so zu hinterschneiden, daß zusammen mit einem definierten Erweichen oder Aufschmelzen der beiden Rohrteile im Bereich der Stoßflächen für den aufgeschmolzenen Kunststoff beim anschließenden Stoßen der angeschmolzenen Teile keine Veranlassung besteht, an der Innenfläche des gebildeten rohrförmigen Teils auszutreten und so den bisher entstehenden Innenwulst zu bilden. Unter definiertem Aufschmelzen wird hierbei verstanden, daß die Rohrwandung der beiden miteinander zu vereinigenden Teile durch zu den hinterschnittenen Stoßflächen korrespondierende Anlageteile des Heizelementes im wesentlichen gleich tief in axialer Richtung aufgeschmolzen werden. Die Grenze fest/flüssig bzw. fest/ erweicht soll also etwa parallel oder konturengleich zur Stoßfläche des jeweiligen Teils verlaufen, die durch die Hinterschneidung oder Auskehlung gebildet wurde. Auf diese Weise wird Platz innerhalb der Dicke der Rohrwandung für den erweichten Kunststoff geschaffen, der beim Stoßen der beiden angeschmolzenen Teile bewegt wird und bisher an der Innenwandung des gebildeten rohrförmigen Teils in Form einer Wulst ausgetreten ist. Auf diese Weise verbleibt der beim Zusammenfügen verdrängte flüssige oder erweichte Kunststoff im wesentlichen in dem durch die Hinterschneidung oder Auskehlung gebildeten Raum und tritt nicht mehr als den freien Querschnitt des Rohres beeinträchtigenden Hindernis in Erscheinung

Bei einem besonders bevorzugten Ausführungsbeispiel der Erfindung kann im Bereich der zu erzeugenden Schweißnaht an den Innenwandungen der beiden zu verbindenden Teile ein Formteil, vorzugsweise aus Polypropylen, vorgesehen sein. Hierbei wird eine besonders glatte Innenwandung des fertiggestellten Rohres erzielt.

Weitere Einzelheiten, Merkmale und Vorteile der Erfindung ergeben sich aus der folgenden Beschreibung eines bevorzugten Ausführungsbeispiels der Erfindung sowie anhand der schematischen Zeichnung und der Patentansprüche.

Hierbei zeigen:

Fig. 1 das Verschweißen zweier Kunststoffrohrteile bis 3: entsprechend dem erfindungsgemäßen Verfahren;

Fig. 4: ein wesentliches Teil einer erfindungsgemäßen Vorrichtung zur Durchführung des erfindungsgemäßen Verfahrens und

Fig. 5 verschiedene mögliche Konfigurationen von abgeschrägten oder hinterschnittenen Stoßflächen der zu verbindenden Rohrteile in vergrößerter Darstellung.

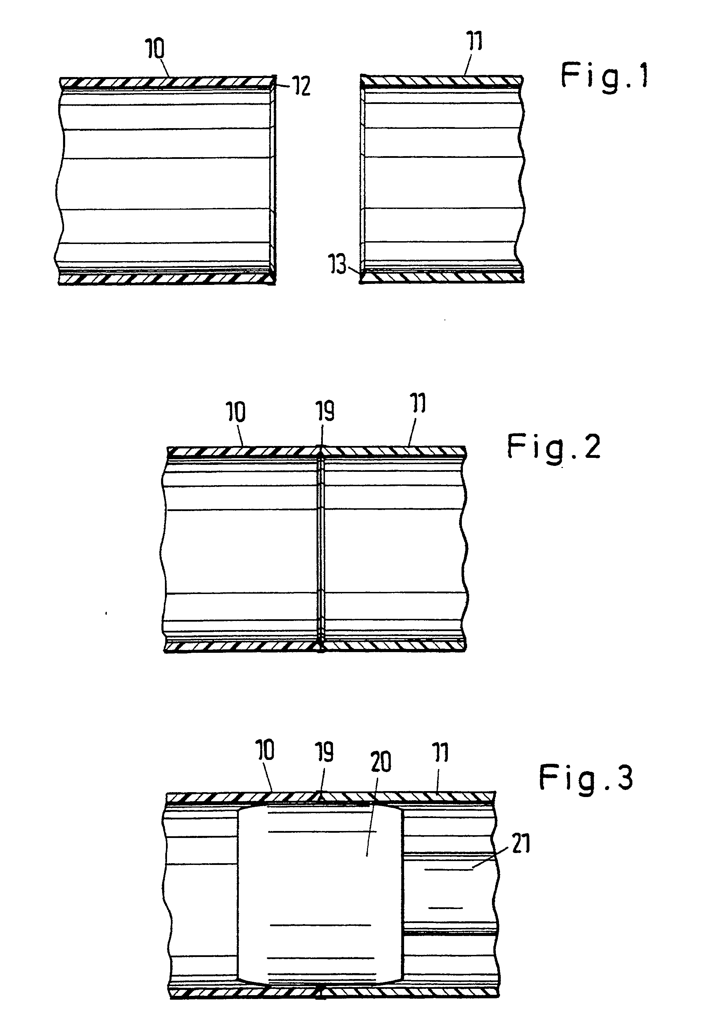

In der Zeichnung sind in den Figuren 1 bis 5 die beiden gezeigten, miteinande zu verbindenden Rohrteile aus Kunstsoff mit den Bezugsziffern 10 und 11 bezeichnet. Sie weisen gleichen oder etwa gleichen Durchmesser auf.

Das Kunststoffmaterial ist Polyvinylidenfluorid, Polypropylen, Polyethylen oder ein ähnlicher Kunststoff.

Obwohl in der Zeichnung zwei gerade Rohrstücke 11 und 12 gezeigt sind, so liegt doch auf der Hand, daß auch gekrümmte Rohrteile mit dem erfindungsgemäßen Verfahren sowie der erfindungsgemäßen Vorrichtung miteinander verbunden werden können, ebenso gerade Rohrteile mit Rohrkrümern oder Bogenteilen. Es kommt lediglich darauf an, daß die beiden zu verbindenden rohrförmigen Teile im Bereich ihrer Stoßflächen gleichen oder etwa gleichen Durchmesser aufweisen.

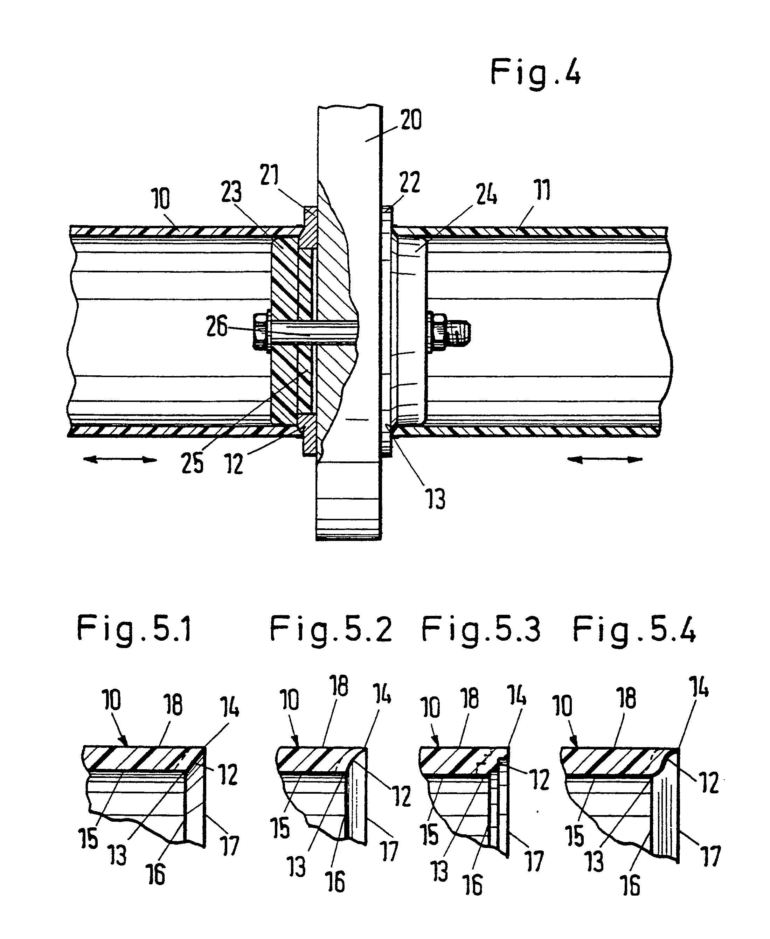

Wie sich aus der Zeichnung und insbesondere aus den vergrößerten Darstellungen gemäß Fig. 5 ergibt, sind die Stoßlächen 12 und 13 der beiden miteinander zu verschweißenden Rohrteile 10 und 11 hinterschnitten oder ausgekehlt ausgebildet, d. h. die einzelnen Rohrteile sind nicht glatt durchschnitten. Sie werden vielmehr im Anschluß nach ihrem Abtrennen von einem längeren Rohrstück mit der Auskehlung oder Hinterschneidung 12 versehen. Beim Anbringen der Auskehlung und Hinterschneidung ist im wesentlichen darauf zu achten, daß die von der Innenfläche 15 des rohrförmigen Teils 10 bzw. 11 und der Stoßfläche 12 gebildete Kante gegenüber der von der Außenfläche 18 des rohrförmigen Teils 10 bzw. 11 und der Stoßfläche 12 gebildeten Kante zurückspringt.

Der Vollständigkeit halber sei darauf hingewiesen, daß die Stoßflächen 12 des rohrförmigen Teils 11 gemäß Fig. 5 spiegelbildlich zu den dargestellten Stoßflächen 12 des rohrförmigen Teils 10 ausgebildet sind, wie dies auch in den Fig. 1 und 4 gezeigt ist.

Zum Verschweißen der beiden rohrförmigen Teile 10 und 11 werden die Stoßflächen 12 derart erhitzt, daß sich im Bereich der Stoßflächen 12 eine Schmelz- oder Erhitzungszone der Rohrteile 10 und 12 derart ergibt, daß einmal die Kontur oder Topographie der gewählten Hiterschneidung 12 im wesentlichen erhalten bleibt und zu anderen der Phasenübergang dieser Schmelzzone von flüssig bzw. erweicht gegenüber dem festen Material des Rohrteils 10 und 11, ebenfalls im wesentlichen die gleiche Kontur wie die Hinterschneidung oder Auskehlung 12 aufweist; vgl. die gestrichelte Darstellung in Fig. 5. Anders ausgedrückt, setzt sich also diese Erweichungs- oder Schmelzzone des erhitzten Kunststoffs in axialer Richtung des Rohrteils unabhängig vom jeweiligen Durchmesser gleich tief in der Rohrwandung fort. Man erhält also einen Schmelz- oder Erweichungsbereich im Bereich der Stoßfläche 12, dessen Form grundsätzlich der der Kontur der Stoßfläche 12 entspricht.

Nachden die Stoßflächen 12 der Rohrteile 10 und 11 zur Ausbildung der beschriebenen Schmelzzonen erhitzt worden sind, vgl. Fig 1, werden sie gemäß Fig. 2 axial fluchtend aneinander gestoßen. Nach Abkühlung der Schweißnaht 19 sind die beiden Rohrteile 10 und 11 fest miteinander verbunden.

Aus Fig. 2 ergibt sich der wesentliche Vorteil der Erfindung. Man erkennt, daß die Schweißnaht 19 an der Innenwandung der Einheit 10, 11 praktisch nicht hervortritt, daß sich vielmehr eine im wesentlichen glatte Innenfläche einstellt. Es bedarf keiner weiteren Erläuterung, daß sich hierdurch günstige Strömungsverhältnisse in der Einheit 10, 11 einstellen, da die Scheißnaht 19 die Strömung nicht oder nur kaum behindert.

Durch die erfindungsgemäße Auskehlung oder Hinterschneidung der Stoßfläche 12 verbleibt dem erweichten Kunststoff der Rohrteile 10 und 11 die Möglichkeit, sich beim Stoßen der Rohrteile 10 und 11 in dem durch die Hinterschneidung gebildeten freien Raum im Bereich der Rohrwandung anzusammeln. Das erweichte Material wird im Bereich der Innenwandung der Rohrteile 10 und 11 also nicht gezwungen, über die Innenwandung der Rohrteile hinaus in den freien Querschnitt auszutreten. Es sei angemerkt, daß die Verhältnisse im Bereich des Außendurchmessers der Einheit 10 und 11 anders liegen, vgl. Fig. 2 und 3. Dort tritt das erweichte oder flüssige Kunststoffmaterial nach außen aus und bildet den gezeigten Schweißwulst (19). Dort ist ein Schweißwulst für die Strömung im Innenraum des Rohres jedoch nicht von Nachteil.

Soll eine absolut glatte Innenfläche beim Verbinden der Rohrteile 10 und 11 erzielt werden, so kann gemäß Fig. 3 im Bereich des Stoßes der beiden Rohrteile ein Werkzeug 20 angeordnet werden, welches an der Innenwandung anliegt, dessen Außendurchmesser also gleich groß wie der Innendurchmesser der Rohrteile 10 und 11 ist. Hierdurch wird das erweichte oder flüssige Material im Bereich der Stoßfläche 12 gezwungen, nach außen auszutreten. Das Werkzeug ist beispielweise ein Polypropylenpfropfen, der über eine Handhabe 21 manipuliert werden kann. Bezüglich der Fig. 1 bis 3 und 5 sei noch erwähnt, daß es such bei den dort gezeichneten Darstellungen um Axialschnitte durch rohrförmige Bauteile handelt.

In Fig. 4 ist wiederum ein Axialschnitt durch die beiden rohrförmigen Teile 10 und 11, jedoch zusammen mit einem Werkzeug zur Erhitzung der Stoßflächen 12 und 13 gezeigt. Das Werkzeug ist grundsätzlich ein Heizelement 20, welches beispielsweise durch eine nicht gezeigte elektrische Widerstandsheizung beheizt wird. Hierzu können beispielsweise in wiederum nicht gezeigten Kanälen elektrische Heizspiralen angeordnet sein. Auch kann in diesen Kanälen eine erhitzte Wärmetauscherflüssigkeit strömen. Wie sich aus Fig. 4 weiter ergibt, ist bei dem gezeigten bevorzugten Ausführungsbeispiel die Heizeinrichtung symmetrisch aufgebaut, so daß die beiden rohrförmigen Teile 10 und 11 gleichzeitig bei Anlage an der Heizeinrichtung in der oben beschriebenen Weise im Bereich ihrer Stoßflächen 12 und 13 erhitzt und erweicht bzw. verflüssigt werden können. Zu diesem Zweck sind gemäß Fig. 4 seitlich am Heizelement 20 je ein Heizring 21, 22 sowie ein Zentrier- und Kalibrierungsstopgen 23, 24 vorgesehen. Diese Stopfen 23, 24 dienen zur Zentrierung und Kalibrierung der beiden Rohrteile 10 und 11. Beide Stopfen 23, 24 weisen darüber hinaus Zentrieransätze 25 zur Zentrierung bezüglich des Ringes 21 auf. Die Teile 21, 22, 23, 24 und 25 sind mittels einer insgesamt mit 26 bezeichneten Zentrierschraube am Heizelement 20 angeordnet. Die Ringe 21, 22 sowie die Zentrier- und Kalibrierungsstopfen 23, 24 sind vorzugsweise aus Polytetrafluorethylen oder einem ännlichen Kunststoff gefertigt.

Das Heizelement 20 wird soweit erhitzt, daß im Wege der Wärmeübertragung die Ringe 21 und 22 eine solche Temperatur annehmen, daß bei Anlage der rohrförmigen Teile 10 und 11, wie in Fig. 4 dargestellt, die späteren Stoßflächen dieser Teile, die, wie wiederum in Fig. 4 gezeigt ist, an den Ringen 21 und 22 im Bereich ihrer Stoßflächen 12 und 13 vollflächig an den Ringen 21 und 22 anliegen, soweit erhitzt werden, daß sie anschmelzen oder erweichen.

Wie sich aus Fig. 4 ergibt, sind die Ringe 21 und 22 im Bereich ihrer Kontakfläche mit den späteren Stoßflächen 12 und 13 der Rohrteile 10 und 11 hinsichtlich ihrer Topographie korrespondierend zu den Stoßflächen 12 und 13 ausgebildet. Auf diese Weise kommt es zu der erwähnten satten Anlage zwischen Stoßflächen 12 und 13 und den Ringen 21 bzw. 22. Diese Anlage bewirkt wiederum ein praktisch gleichtiefes Eindringen der Wärmeenergie von den Ringen 21 und 22 in dem Bereich der Stoßflächen 12 und 13, so daß es zu dem gleichtiefen Erweichen oder Aufschmelzen der rohrförmigen Teile 10 und 11 im Bereich der Stoßflächen 12 und 13 kommt, wie dies im einzelnen in Verbindung mit der Fig. 5 beschrieben wurde. Somit erstreckt sich der erweichte Bereich der Rohrteile 10 und 11 in Axialrichtung über sämtliche Durchmesser der Rohrwandungen gleich tief.

Nachdem dieser Zustand erreicht wurde, werden die Rohrteile 10 und 11 in Richtung ihrer Längsachse vom Heizelement 20 weg verfahren, so daß das Heizelement 20 in seiner Gesamtheit aus seiner Stellung zwischen den beiden Rohrteilen 10 und 11 herausbewegt werden kann. Dieser Zustand entspricht der Position gemäß Fig. 1.

Sodann werden beide Rohrteile 10 und 11 zusammen bewegt und zur Anlage gebracht, worauf es beim Abkühlen der so gebildeten Schweißnaht 19 zu einer dauerhaften Verbindung beider Rohrteile 10 und 11 kommt; vgl. Fig. 2.

Abschließend sei darauf hingewiesen, daß es grundsätzlich auch möglich ist, die Hinterschneidung oder Auskehlung der Stoßflächen 12, 13 dadurch zu erzeugen, daß die Ringe 21, 22, die zunächst nicht hinterschnittene Stoßfläche, die also in diesem Fall senkrecht zur Längsachse der Rohrteile 10, 11 verläuft, auf schmelzen und in die hinterschnittene Form, wie sie in den Zeichnungen wiedergegeben ist, bringen. Hierbei müssen jedoch besondere Vorkehrungen getroffen werden, um das in Richtung Rohrinnere abgedrängte Kunststoffmaterial im Rohrinneren zu entfernen.

Auch ist es möglich, das Heizelement nur auf einer Seite mit einem Ring 21 bzw. 22 und ggf. dem zugehörigen Zentrierungsstopfen 23 zu versehen und hiermit zunächst nur die Stoßfläche eines rohrförmigen Teils zu erhitzen und zu erweichen, dieses sodann zu entnehmen und dann die Stoßfläche des zweiten Teils 11 zu erweichen, um dann beide Teile aneinanderzustoßen und zu verschweißen. Im Hinblick auf eine kostengünstige und schnelle Fertigung ist jedoch die symmetrische Ausbildung des Heizelements mit den Ringen 21, 22 und den Zentrierungs- und Kalibrierungsstopfen 23, 24 gemäß Fig. 4 zu bevorzugen.

## Patentansprüche

1. Vorrichtung zum Verbinden von rohrförmigen Teilen (10, 11) aus Kunststoff, insbesondere Polyvinylidenfluorid, Polypropylen oder Polyethylen, welche Teile (10, 11) etwa gleichen Durchmesser aufweisen, mit einem Heizelement (20) zum Erweichen des Bereichs der angefasten Stoßfläche, (12, 13) mindestens eines rohrförmigen Teiles (10, 11), dadurch gekennzeichnet, daß die Anlagefläche des Heizelementes (20) an der Stoßfläche (12, 13) des rohrförmigen Teils (10, 11) korrespondierend zu der hinterschnittenen oder ausgekehlten Stoßfläche (12, 13) ausgebildet ist.

2. Vorrichtung nach Anspruch 1, dadurch gekennzeichnet, daß die korrespondierende Anlagefläche des Heizelementes (20) in Form eines ringförmigen oder scheibenförmigen Ansatzes an dem Heizelement (20) vorgesehen ist.

3. Vorrichtung nach Anspruch 1 oder 2, dadurch gekennzeichnet, daß das Heizelement (20) mit einem Zentrierungs- und/oder Kalibrierungssatz (23, 24) für das rohrförmige Teil versehen ist.

4. Vorrichtung nach mindestens einem der Ansprüche 1 bis 3, dadurch gekennzeichnet, daß das Heizelement (20) zwei Hauptflächen aufweist, an denen gegenüberliegend und fluchtend je ein ring- oder scheibenförmiger Ansatz (21, 22) und ein Zentrierungs- und/oder Kalibrierungsansatz (23, 24) vorgesehen sind.

5. Vorrichtung nach Anspruch 1 bis 4, <u>dadurch gekennzeichnet</u>, daß der ring- oder scheibenförmige Ansatz (21, 22) und der Zentrierungs- und/oder Kalibrierungsansatz (23, 24) aus Tetrafluorethylen bestehen.

6. Vorrichtung nach mindestens einem der Ansprüche 1 bis 5, <u>dadurch gekennzeichnet</u>, daß die ring- oder scheibenförmigen Ansätze, (21, 22) und die Zentrierungs- und/oder Kalibrierungsansätze (23, 24) als Einzelteile auf dem Heizelement (20) mittels eines einzigen durchgehenden Bolzens (26) angeordnet sind.

7. Vorrichtung nach mindestens einem der Ansprüche 1 bis 6, <u>dadurch gekennzeichnet</u>, daß im Bereich des Stoßes der rohrförmigen Teile (10, 11) ein an deren Innenwandung (15) anliegendes Formteil (20) angeordnet ist.

8. Vorrichtung nach Anspruch 7, <u>dadurch gekennzeichnet</u>, daß das Formteil (20) ein Stopfen aus Polypropylen ist.

9. Vorrichtung nach mindestens einem der Ansprüche 1 bis 8, <u>dadurch gekennzeichnet</u>, daß die Stoßflächen (12, 13) der Teile (10, 11) zur Erzeugung der Hinterschneidung oder Auskehlung mit den korrespondierenden Anlageflächen erweich- und formbar sind.

## Claims

1. Device for joining tubular parts (10, 11) made from plastic, especially polyvinylidene fluoride, polypropylene or polyethylene, said parts (10, 11) exhibit about the same diameter, with a heating element (20) for softening of the area of chamfered abutting surface (12, 13) at least of one tubular part, <u>characterised in</u> that the contact surface of heating element (20) on abutting surface (12, 13) of tubular part (10, 11) is designed to correspond to undercut or recessed abutting surface (12, 13).

2. Device according to claim 1, <u>characterised in</u> that the corresponding contact surface of heating element (20) is provided in the form of an annular or disk-shaped lug on heating element (20).

3. Device according to claim 1 or 2, <u>characterised in</u> that element (20) is provided with centering and/or calibrating lug (23, 24) for the tubular part.

4. Device according to claims 1 to 3, <u>characterised in</u> that heating element (20) exhibits two main surfaces, on each of which is provided, opposite and flush, an annular or disk-shaped lug (21, 22) each and a centering and/or calibrating lug (23, 24).

5. Device according to claims 1 to 4, <u>characterised in</u> that annular or disk-shaped lug (21, 22) and centering and/or calibrating lug (23, 24) consist of tetrafluoroethylene.

6. Device according to at least one of claim 1 to 5, <u>characterised in</u> that annular or disk-shaped lugs (21, 22) and centering and/or calibrating lugs (22, 24) are placed as components on heating element (20) by means of a single throug bolt (26).

7. Device according to at least one of claims 1 to 6, <u>characterised in</u> that in the area of the joint of tubular parts (10, 11) is placed a form piece (20) applied to its inside wall (15).

8. Device according to claim 7, <u>characterised in</u> that form piece (20) is a polypropylene lug.

9. Device according to at least one of claims 1 to 8, <u>characterised in</u> that the abutting surfaces (12, 13) of parts (10, 11) can be softened and formed with the corresponding contact surfaces to produce the undercut or recess.

## Revendications

1. Dispositif pour relier des pièces tubulaires (10, 11) en matière synthétique, notamment de fluorure de polyvinylidène, de polypropylène ou de polyéthylène, pièces (10, 11) ayant sensiblement le même diamètre, avec un élément chauffant (20) pour ramollir la zone des surfaces d'about (12, 13), biseautées, au moins l'une des pièces tubulaires (10, 11), dispositif caractérisé en ce que la surface d'appui de l'élément chauffant (20) contre l'une des surfaces d'about (12, 13) de la pièce tubulaire (10, 11) est réalisée de manière correspondante à la surface d'about (12, 13) à contre-dépouille ou à gorge.

2. Dispositif selon la revendication 1, caractérisé en ce que la surface d'appui correspondante de l'élément chauffant (20) se présente sous la forme d'un épaulement annulaire ou en disque sur l'élément chauffant (20).

3. Dispositif selon la revendication 1 ou 2, caractérisé en ce que l'élément chauffant (20) est muni d'un organe de centrage et/ou de calibrage (23, 24) pour la pièce tubulaire.

4. Dispositif selon au moins l'une des revendications 1 à 3, caractérisé en ce que l'élément chauffant (20) comporte deux surfaces principales munies de manière opposée et alignée, chaque fois d'un prolongement (21, 22) annulaire ou en forme de disque et d'un organe de centrage et/ou de calibrage (23, 24).

5. Dispositif selon les revendications 1 à 4, caractérisé en ce que le prolongement (21, 22) en forme d'anneau ou de disque et l'organe de centrage et/ou de calibrage (23, 24) sont en tétrafluoroéthylène.

6. Dispositif selon au moins l'une des revendications 1 à 5, caractérisé en ce que les prolongements annulaires ou en forme de disques (21, 22) et les organes de centrage et/ou de calibrage (23, 24) sont des pièces distinctes montées sur l'élément chauffant (20) à l'aide d'un seul goujon traversant (26).

7. Dispositif selon au moins l'une des revendications 1 à 6, caractérisé en ce qu'au niveau de l'about et des pièces tubulaires (10, 11) il est prévu une pièce de forme (20) qui s'applique contre la paroi intérieure (15).

8. Dispositif selon la revendication 7, caractérisé en ce que la pièce de forme (20) est un bouchon en polypropylène.

9. Dispositif selon au moins l'une des revendications 1 à 8, caractérisé en ce que les surfaces d'about (12, 13) des pièces (10, 11) sont ramollies et susceptibles d'être mises en forme pour créer la partie en contre-dépouille ou la gorge dans les surfaces d'appui correspondantes.

Fig.1

Fig.2

Fig.3

# Fig.4

# Fig.5.1  Fig.5.2  Fig.5.3  Fig.5.4